# EUROPEAN PATENT SPECIFICATION

(11) **EP 3 009 739 B1**
(45) Date of publication and mention of the grant of the patent: **30.12.2020**
(21) Application number: 15165517.2
(22) Date of filing: 28.04.2015
(51) Int. Cl.: F21V 21/096, F21V 21/03, H02G 3/00, H01F 38/14, H02J 50/10, F21V 23/00, F21Y 115/10, F21Y 103/10

(54) **WALL STRUCTURE AND LIGHTING SYSTEM USING THE SAME**
WANDSTRUKTUR UND BELEUCHTUNGSSYSTEM DAMIT
STRUCTURE DE PAROI ET SYSTEME D'ECLAIRAGE UTILISANT CELUI-CI

(30) Priority: 29.04.2014 KR 20140051199
(43) Date of publication of application: 20.04.2016
(73) Proprietor: Feelux Co., Ltd., Gyeonggi-do 482-844 (KR)
(72) Inventor: Noh, Si Chung, 482-844 Gyeonggi-do (KR); Jhun, Ha Young, 143-752 Seoul (KR)
(74) Representative: Scheele, Friedrich

(56) References cited:
- EP-A1- 1 840 454
- WO-A1-2008/099306
- DE-A1- 3 811 740
- DE-U1-202005 020 315
- DE-U1-202006 000 425
- GB-A- 1 032 184

## Description

### BACKGROUND

### 1. Field of the Invention

The present invention relates to a wall structure which supplies power to an electronic apparatus, and a lighting system using the same.

### 2. Discussion of Related Art

Generally, an electronic apparatus like a lighting apparatus has a power connection line or a power connection unit such as a power socket to receive power from an outside. In this case, since a volume of the electronic apparatus is increased, and a structure of the electronic apparatus is also complicated, a space capable of providing or installing the electronic apparatus is limited.

DE 38 11 740 A1 discloses a low-voltage illumination system in which at least one luminaire is arranged on a luminaire support by means of a mount which has mount pieces which are connected to the luminaire and are constructed as permanent magnets, on the flat mount surfaces of which mount pieces flat contact pieces of an electrically are conducting material are arranged. Furthermore, WO 2008/099306 A1, DE 20 2006 000425 U1 and DE 20 2005 020315 U1 disclose lighting systems of the prior art.

### SUMMARY

One or more embodiments of the present invention is directed to a wall structure which is capable of simplifying a structure related to power supply of an electronic apparatus, and also reducing a volume thereof, and a lighting system using the same.

Also, One or more embodiments of the present invention is directed to a wall structure which is capable of enhancing installability of an electronic apparatus, and also allowing the electronic apparatus to be installed at a position desired by a user, and a lighting system using the same.

According to an aspect of the present invention, there is provided a wall structure including an installation surface on which an electronic apparatus is installed; a first conductive attachment part provided at the installation surface to be attached to the electronic apparatus, and electrically connected with a first terminal of a power source configured to supply power to the electronic apparatus; and a second conductive attachment part provided at the installation surface to be attached to the electronic apparatus, spaced from the first conductive attachment part, and electrically connected with a second terminal of the power source.

The first and second conductive attachment parts may be conductive adhesive tapes of which one ends are adhered to the installation surface, and the other ends are adhered to the electronic apparatus.

The first and second conductive attachment parts are insulating adhesive tapes of which one surfaces are adhered to the installation surface and the other surfaces are adhered to the electronic apparatus, and may include at least one via hole electrically connected with the power source at the one surfaces and electrically connected with the electronic apparatus at the other surfaces.

The first conductive attachment part may include a first conductive plate fixed to the installation surface, electrically connected with a first terminal of the power source, and in contact with the electronic apparatus, and a first magnetic body fixed to the installation surface and attached to the electronic apparatus, and the second conductive attachment part may include a first conductive plate fixed to the installation surface, electrically connected with a second terminal of the power source, and in contact with the electronic apparatus, and a second magnetic body fixed to the installation surface and attached to the electronic apparatus.

The first conductive attachment part and the second conductive attachment part may be magnetic bodies formed of a conductive material.

The wall structure may further include a third conductive attachment part provided at the installation surface to be attached to the electronic apparatus, electrically connected with a control device provided at an outside of the electronic apparatus, and configured to transfer a control signal generated in the control device to the electronic apparatus.

The electronic apparatus may be a lighting apparatus, and the third conductive attachment part may transfer at least one of a dimming signal and a digital multiplex (DMX) signal generated from the control device to the lighting apparatus.

The wall structure may further include an insertion groove provided at the installation surface so that a part or whole of the electronic apparatus is inserted therein, and the first and second conductive attachment parts may be provided in the insertion groove.

According to another aspect of the present invention, there is provided a wall structure including an installation surface on which an electronic apparatus is installed; an adhering member provided at the installation surface and attached to the electronic apparatus; a magnetic body provided at the installation surface; and a first coil provided at the magnetic body and electronically connected with a power source, wherein the first coil supplies power of the power source to the electronic apparatus through an electromagnetic inductive coupling.

The wall structure may further include a conductive attachment part provided at the installation surface to be attached to the electronic apparatus, electrically connected with a control device provided at an outside of the electronic apparatus, and configured to transfer a control signal generated in the control device to the electronic apparatus.

The electronic apparatus may be a lighting apparatus, and the conductive attachment part may transfer at least one of a dimming signal and a digital multiplex (DMX) signal generated in the control device to the lighting apparatus.

According to the present invention, there is provided a lighting system including a lighting apparatus; a first conductive attachment part provided at an installation surface, on which the lighting apparatus is installed, to be attached to the lighting apparatus, and electrically connected with a first terminal of a power source configured to supply power to the lighting apparatus; and a second conductive attachment part provided at the installation surface to be attached to the lighting apparatus, spaced from the first conductive attachment part, and electrically connected with a second terminal of the power source.

The lighting apparatus includes a light part and a housing part configured to accommodate the lighting part, and the housing part includes a first housing part attached to the first conductive attachment part, formed of a conductive material, and electrically connected with the lighting part; a second housing part attached to the second conductive attachment part, formed of the conductive material, and electrically connected with the lighting part; and an insulation part disposed between the first and second housing parts to insulate the first and second housing part from each other.

The lighting apparatus may further include a heat radiation part provided at at least one of the first and second housing parts.

The lighting apparatus includes a lighting part having a board on which at least one light emitting element is mounted and a housing part configured to accommodate the lighting part, and the housing part may include a first insulating plate provided in a lengthwise direction of the housing part; a second insulating plate provided in the lengthwise direction of the housing part to be orthogonal to the first insulating plate; and first to fourth housing parts disposed between the first and second insulating plates to be electrically insulated by the first and second insulating plates, and two of the first to fourth housing parts, on which the board is seated, may be attached to the first and second conductive attachment parts, respectively, and electrically connected with the board.

The lighting system may further include an insertion groove provided at the installation surface so that a part or all of the lighting apparatus is inserted therein, and the first and second conductive attachment parts may be provided in the insertion groove.

The first and second conductive attachment parts may be provided between an upper end of a panel and a ceiling on a wall surface on which the panel is installed, and the lighting apparatus may be attached to the first and second conductive attachment parts between the upper end of the panel and the ceiling.

According to yet another aspect of the present invention, there is provided a lighting system including a lighting apparatus; a magnetic body provided on an installation surface on which the lighting apparatus is installed; an adhering member provided on the installation surface and adhered to the lighting apparatus; and a first coil provided at the magnetic body and electrically connected with a power source, wherein the lighting apparatus includes a second coil coupled with the first coil through an electromagnetic inductive coupling, and configured to receive power of the power source through the electromagnetic inductive coupling.

The lighting apparatus may include a lighting part and a housing part configured to accommodate the lighting part, and the housing part may be attached to the installation surface by the adhering member, and the second coil may be provided in the housing part and electrically connected with the lighting part.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a view schematically illustrating a lighting system in accordance with one embodiment of the present invention;
FIG. 2 is a view schematically illustrating a lighting system in accordance with another embodiment of the present invention;
FIG. 3 is a view schematically illustrating a lighting system;
FIG. 4 is a view illustrating a state in which a lighting system in accordance with one embodiment of the present invention is installed at an exhibition stand;
FIG. 5 is a view illustrating a state in which a conductive attachment part is formed at the wall structure in accordance with one embodiment of the present invention;
FIG. 6 is an exploded perspective view illustrating a lighting apparatus in accordance with one embodiment of the present invention;
FIG. 7 is a view schematically illustrating another example of a housing part in the lighting apparatus in accordance with the embodiment of the present invention;
FIG. 8 is a cross-sectional view schematically illustrating a state in which the lighting apparatus including the housing part illustrated in FIG. 7 is installed at the wall structure;
FIG. 9 is a view illustrating a state in which a first conductive attachment part and a second conductive attachment part are attached to the lighting apparatus in an insertion groove of FIG. 8;
FIG. 10 is a view schematically illustrating a state in which the lighting apparatus including a housing part in accordance with still another embodiment of the present invention is installed at the wall structure; and
FIGS. 11A and 11B are views illustrating another example in which the lighting apparatus in accordance with the embodiment of the present invention is installed at the wall structure.

### DETAILED DESCRIPTION OF EXEMPLARY EMBODIMENTS

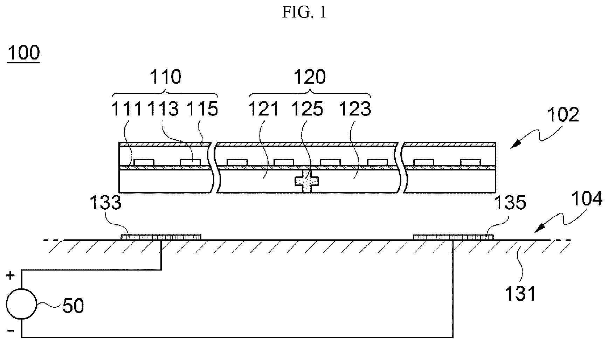

Hereinafter, specific embodiments of a wall structure of the present invention and a lighting system using the same will be described with reference to FIGS. 1 to 11. However, the embodiments are merely to illustrate, and the present invention is not limited thereto.

In the following description, detailed descriptions of well-known functions or constructions will be omitted since they would obscure the invention in unnecessary detail. Also, the terms used herein are defined according to the functions of the present invention. Thus, the terms may vary depending on user's or operator's intentions or practices. Therefore, the terms used herein must be understood based on the descriptions made herein.

FIG. 1 is a view schematically illustrating a lighting system in accordance with one embodiment of the present invention.

Referring to FIG. 1, the lighting system 100 may include a lighting apparatus 102 and a wall structure 104.

The lighting apparatus 102 may be installed at the wall structure 104 to be electrically connected with the wall structure 104 and thus receive power from the wall structure 104. For convenience of explanation, FIG. 1 illustrates a cross-sectional view in a lengthwise direction of the lighting apparatus 102. The lighting apparatus 102 may include a lighting part 110 and a housing part 120.

The lighting part 110 may include a board 111, a light emitting element 113 and a diffusion part 115. The board 111 is a part on which the light emitting element 113 is installed, and serves to support mechanically the light emitting element 113. The board 111 may be formed in a bar shape having a predetermined length. However, a shape of the board 111 is not limited thereto. Various circuit patterns and electronic components for driving the light emitting element 113 may be provided on the board 111. For example, a first circuit pattern (not shown) for supplying the power to a first terminal of the light emitting element 113 and a second circuit pattern (not shown) for supplying the power to a second terminal of the light emitting element 113 may be provided on the board 111. The board 111 is electrically connected with the housing part 120 and receives the power for driving the light emitting element 113 from the housing part 120.

The light emitting element 113 is a device which converts electric energy into light energy and thus generates light. For example, the light emitting element 113 may be a light emitting diode (LED) or an organic light emitting diode (OLED). At least one light emitting element 113 is mounted on the board 111. A plurality of light emitting elements 113 may be arranged in a lengthwise direction of the board 111 to be spaced from each other. Each of the light emitting elements 113 have the first and second terminals (not shown) to which the power is supplied.

The diffusion part 115 is provided in a moving direction of light generated in the light emitting element 113. For example, the diffusion part 115 may be provided above the light emitting element 113. The diffusion part 115 serves to diffuse the light generated in the light emitting element 113 to an outside. Also, the diffusion part 115 may serve to protect the board 111 and the light emitting element 113 from an external environment.

The housing part 120 accommodates the lighting part 110 therein. That is, the board 111 may be installed and fixed in the housing part 120. The housing part 120 may include a first housing part 121, a second housing part 123, and an insulation part 125. Here, the insulation part 125 may be disposed between the first and second housing parts 121 and 123 and coupled with each of the first and second housing parts 121 and 123. The insulation part 125 serves to electrically insulate the first and second housing parts 121 and 123 from each other. The insulation part 125 may be provided in a width direction of the lighting apparatus 102 (i.e., in a direction perpendicular to a paper surface in FIG. 1) between the first and second housing parts 121 and 123. The first housing part 121 may be formed of a conductive material (e.g., aluminum, copper or the like). At this time, a part of the first housing part 121 may be formed of the conductive material. The first housing part 121 may be electrically connected to the first circuit pattern (not shown) (i.e., the circuit pattern for supplying the power to the first terminal of the light emitting element 113) provided on the board 111. The second housing part 123 may be formed of the conductive material (e.g., aluminum, copper or the like). At this time, a part of the second housing part 123 may be formed of the conductive material. The second housing part 123 may be electrically connected to the second circuit pattern (not shown) (i.e., the circuit pattern for supplying the power to the second terminal of the light emitting element 113) provided on the board 111.

The wall structure 104 has an installation surface 131 on which the lighting apparatus 102 is installed. For example, the wall structure 104 may be an indoor wall, floor and ceiling of a building, an outdoor wall of a building and so on. Also, the wall structure 104 may be, for example, furniture, an exhibition stand, a table, a decoration cabinet, a panel and so on. Furthermore, various structures having the installation surface 131 may be included.

A first conductive attachment part 133 and a second conductive attachment part 135 may be provided at the installation surface 131 of the wall structure 104. The second conductive attachment part 135 is provided to be spaced from the first conductive attachment part 133. The first conductive attachment part 133 may be electrically connected with a first terminal of a power source 50. The second conductive attachment part 135 may be electrically connected with a second terminal of the power source 50. The power source 50 may be provided in the wall structure 104, but is not limited thereto. The power source 50 may be provided at an outside of the wall structure 104. The power source 50 may be a commercial power source, but is not limited thereto. The power source 50 may be a separate power generating apparatus. The power source 50 serves to supply the power to the lighting apparatus 102 through the first and second conductive attachment parts 133 and 135. The power source 50 may autonomously generate the power and then may supply the power to the lighting apparatus 102, or may receive the power generated in an outside and then may supply the power to the lighting apparatus 102. When the power source 50 may be an AC power source, a converter (not shown) which converts AC power of the power source 50 into DC power may be provided between the power source 50 and the first and second conductive attachment parts 133 and 135.

The first and second conductive attachment parts 133 and 135 may be formed of a conductive adhesive tape. Each of the first and second conductive attachment parts 133 and 135 may be attached to the lighting apparatus 102, and may serve to fix the lighting apparatus 102 to the installation surface 131 and to supply the power to the lighting apparatus 102. One surface of each first and second conductive attachment part 133 and 135 is adhered and fixed to the installation surface 131. The other surface of the first conductive attachment part 133 may be adhered to the first housing part 121. The other surface of the second conductive attachment part 135 may be adhered to the second housing part 123.

Here, it has been described that the first and second conductive attachment parts 133 and 135 were formed of the conductive adhesive tape. However, the present invention is not limited thereto. The first and second conductive attachment parts 133 and 135 may be formed of an insulating adhesive tape. That is, the first and second conductive attachment parts 133 and 135 may be formed of an adhesive tape of which one surface is adhered to the installation surface 131 and the other surface is adhered to the lighting apparatus 102. At this time, the insulating adhesive tape may have at least one via hole of which one surface is electrically connected with the power source 50, and the other surface is electrically connected with the lighting apparatus 102. Also, the first and second conductive attachment parts 133 and 135 may be formed of a magnetic body made of a conductive material.

To examine a power supplying route from the power source 50 to the light emitting element 113, the power is supplied in order the first terminal of the power source 50 → the first conductive attachment part 133 → the first housing part 121 → the first circuit pattern (not shown) of the board 111 → the first terminal of the light emitting element 113, and also supplied through the second terminal of the power source 50 → the second conductive attachment part 135 → the second housing part 123 → the second circuit pattern (not shown) of the board 111 → the second terminal of the light emitting element 113.

According to the embodiment of the present invention, since the lighting apparatus 102 is attached and fixed to the wall structure 104, and thus a separate installing member for installing the lighting apparatus 102 is not required, a volume of the lighting apparatus 102 may be reduced, and the lighting apparatus 102 may be easily installed. In addition, the lighting apparatus may be installed at various places and spaces without limitation of an installation place of the lighting apparatus 102. Since the lighting apparatus 102 receives the power from the first and second conductive attachment parts 133 and 135 provided at the installation surface 131, a separate connection device for power supply is not required, and thus a structure of the lighting apparatus 102 may be simplified, while the volume thereof is reduced.

Meanwhile, it has been described herein that the first and second conductive attachment parts 133 and 135 for supplying the power to the lighting apparatus 102 were provided at the installation surface 131. However, the present invention is not limited thereto. A conductive attachment part which is electrically connected with a control device (not shown) for controlling the lighting apparatus 102 and transfers a lighting control signal (e.g., a dimming signal or a digital multiplex (DMX) signal) generated in the control device (not shown) to the lighting apparatus 102 may be provided at the installation surface 131. At least one of a conductive attachment part for supplying the power to the lighting apparatus 102 and a conductive attachment part for transferring the lighting control signal to the lighting apparatus 102 may be provided at the installation surface 131. Also, it has been described herein that the wall structure 104 supplied the power to the lighting apparatus 102. However, the present invention is not limited thereto, and the wall structure 104 may supply the power to various electronic apparatuses in addition to the lighting apparatus 102.

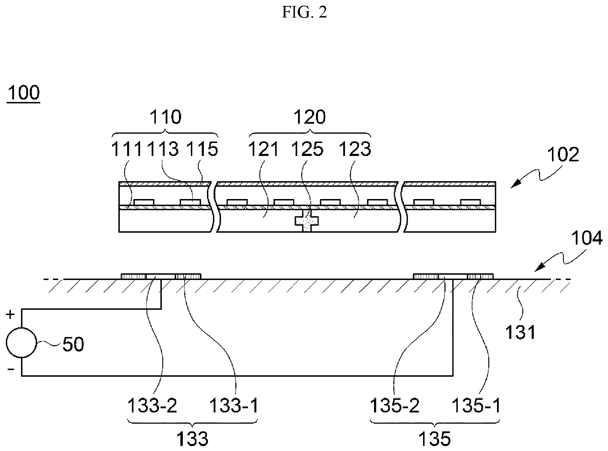

FIG. 2 is a view schematically illustrating a lighting system in accordance with another embodiment of the present invention. Here, portions which are different from those of the embodiment illustrated in FIG. 1 will be mainly described.

Referring to FIG. 2, the first conductive attachment part 133 may include a first conductive plate 133-1 and a first magnetic body 133-2. The second conductive attachment part 135 may include a second conductive plate 135-1 and a second magnetic body 135-2. The first and second conductive plates 133-1 and 135-1 serve to electrically connect the lighting apparatus 102 with the power source 50. The first and second magnetic bodies 133-2 and 135-2 serve to fix the lighting apparatus 102 to the installation surface 131.

The first and second conductive plates 133-1 and 135-1 may be formed of a conductive material (e.g., a metal such as copper, silver, aluminum or the like). The first and second conductive plates 133-1 and 135-1 are fixed to the installation surface 131 to be spaced from each other. The first conductive plate 133-1 is electrically connected to the first terminal of the power source 50, and is in contact with the first housing part 121, and thus serves to transmit the power of the power source 50 to the first housing part 121. The second conductive plate 153-1 is electrically connected to the second terminal of the power source 50, and is in contact with the second housing part 123, and thus serves to transmit the power of the power source 50 to the second housing part 123.

The first and second magnetic bodies 133-2 and 135-2 may be respectively fixed to the installation surface 131 at inner sides of the first and second conductive plates 133-1 and 135-1. However, the present is not limited thereto, and the first and second magnetic bodies 133-2 and 135-2 may be respectively fixed to the installation surface 131 at outer sides of the first and second conductive plates 133-1 and 135-1. When the lighting apparatus 102 is installed on the installation surface 131, the first housing part 121 may be attached to the first magnetic body 133-2, and the second housing part 123 may be attached to the second magnetic body 135-2. At this time, the first and second magnetic bodies 133-2 and 135-2 serve to fix the lighting apparatus 102 to the installation surface 131.

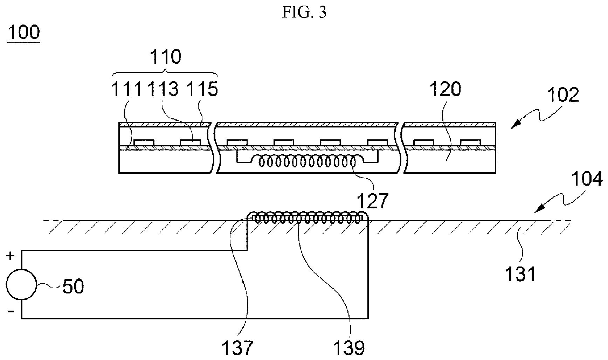

FIG. 3 is a view schematically illustrating a lighting system. Here, portions which are different from those of the embodiment illustrated in FIG. 1 will be mainly described.

Referring to FIG. 3, a magnetic body 137 may be provided at the installation surface 131, and a first coil 139 may be wound on the magnetic body 137. The magnetic body 137 may be buried in the installation surface 131, and one surface thereof (facing the lighting apparatus 102) is exposed to an outside. However, the present invention is not limited thereto, and the magnetic body 137 may be provided to be fixed on the installation surface 131. Both ends of the first coil 139 are electrically connected with the first and second terminals of the power source 50. A fixing member (not shown) such as an adhesive tape may be provided at the installation surface 131 to fix the lighting apparatus 102 to the installation surface 131.

Meanwhile, the lighting apparatus 102 may have the housing part 120 integrally formed therewith. The housing part 120 may be formed of a nonconductive material. A second coil 127 may be provided in the housing part 120. One end of the second coil 127 may be electrically connected with the first circuit pattern (not shown) of the board 111, and the other end thereof may be electrically connected with the second circuit pattern (not shown) of the board 111. The second coil 127 is electrically coupled with the first coil 139 to supply the power to the light emitting element 113.

When the lighting apparatus 102 is installed on the installation surface 131, and the AC power is generated in the power source 50, in the first coil 139, a magnetic field is changed according to a change in polarity of the AC power. Then, a current is induced and flows through the second coil 127 due to the principle of electromagnetic conduction, and the power is supplied to the light emitting element 113 through the board 111.

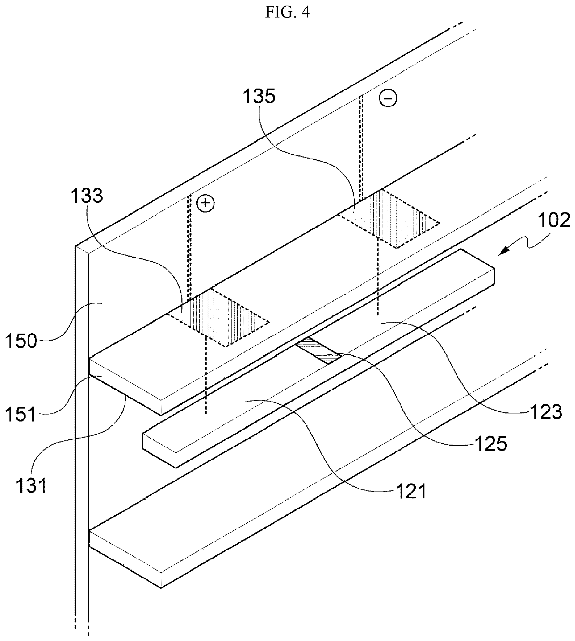

FIG. 4 is a view illustrating a state in which a lighting system in accordance with one embodiment of the present invention is installed at an exhibition stand.

Referring to FIG. 4, a plurality of shelves for displaying articles may be provided at the exhibition stand 150. At this time, a lower surface of each shelf 151 may serves as the installation surface 131. The first and second conductive attachment parts 133 and 135 may be provided on the installation surface 131 to be spaced from each other. The first conductive attachment part 133 may be electrically connected with the first terminal of the power source (not shown), and the second conductive attachment part 135 may be electrically connected with the second terminal of the power source (not shown). The lighting apparatus 102 may be attached and fixed to the lower surface (i.e., the installation surface 131) of the shelf 151. The first housing part 121 may be attached to the first conductive attachment part 133, and the second housing part 123 may be attached to the second conductive attachment part 135. The lighting apparatus 102 receives the power from the first and second conductive attachment parts 133 and 135.

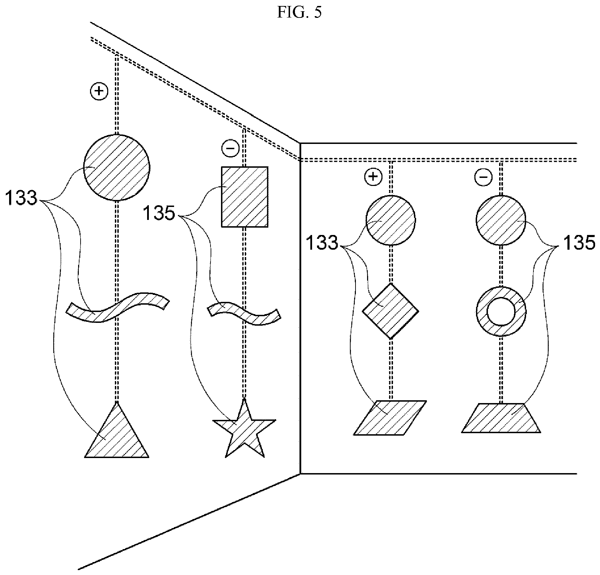

FIG. 5 is a view illustrating a state in which the conductive attachment part is formed at the wall structure in accordance with one embodiment of the present invention.

Referring to FIG. 5, at least one first conductive attachment part 133 and at least one second conductive attachment part 135 may be provided at a wall surface. The at least one first conductive attachment part 133 may be electrically connected with the first terminal of the power source (not shown). The at least one second conductive attachment part 135 may be electrically connected with the second terminal of the power source (not shown). The first and second conductive attachment parts 133 and 135 may be formed in a figure shape (e.g., a circular shape, a square shape, a triangular shape, a star shape, an annular shape or the like), but are not limited thereto. The first and second conductive attachment parts 133 and 135 may be formed in various shapes such as a symbol, a character, a figure and a combination thereof. In this case, the lighting apparatus 102 has only to be attached to a portion in which the first and second conductive attachment parts 133 and 135 are provided, and thus the lighting apparatus 102 may be easily installed at a place desired by a user.

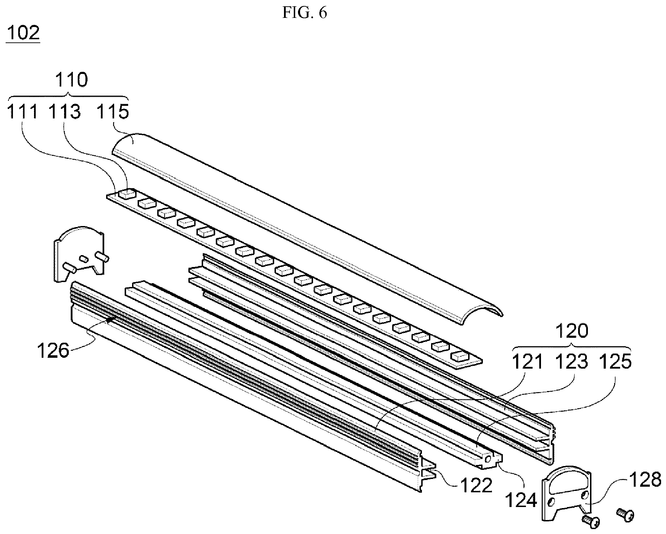

FIG. 6 is an exploded perspective view illustrating a lighting apparatus in accordance with another embodiment of the present invention.

Referring to FIG. 6, the lighting apparatus 102 may include a lighting part 110 and a housing part 120. The lighting part 110 may include a board 111, a light emitting element 113, and a diffusion part 115. Here, since the lighting part 110 is the same as that described with reference to FIG. 1, the detailed description thereof will be omitted.

The housing part 120 may include a first housing part 121, a second housing part 123, and an insulation part 125. Here, the insulation part 125 may be disposed between the first and second housing parts 121 and 123 and coupled with each of the first and second housing parts 121 and 123. The first and second housing parts 121 and 123 are formed to face each other with the insulation part 125 disposed therebetween. A coupling groove 122 may be formed at each of the first and second housing parts 121 and 123 in a lengthwise direction thereof. A coupling protrusion 124 may be formed at both sides of the insulation part 125 in a lengthwise direction of the insulation part 125. At this time, the coupling protrusions 124 formed at both sides of the insulation part 125 may be inserted and coupled into the coupling grooves 122 of the first and second housing parts 121 and 123. However, a coupling method between the first and second housing parts 121 and 123 and the insulation part 125 is not limited thereto. The insulation part 125 is provided between the first and second housing parts 121 and 123 in a lengthwise direction of the lighting apparatus 102 so as to electrically insulate the first and second housing parts 121 and 123 from each other. For reference, FIG. 1 illustrates the case in which the insulation part 125 is provided in the width direction of the lighting apparatus 102 so as to electrically insulate the first and second housing parts 121 and 123 from each other.

A heat radiation part 126 which is formed in an uneven shape to increase a contact area with air may be provided at outer surfaces of the first and second housing parts 121 and 123. The heat radiation part 126 serves to radiate heat generated in the lighting part 110. A finishing member 128 may be coupled to both ends of the first and second housing parts 121 and 123. The diffusion part 115 may be slidably coupled to upper ends of the first and second housing parts 121 and 123.

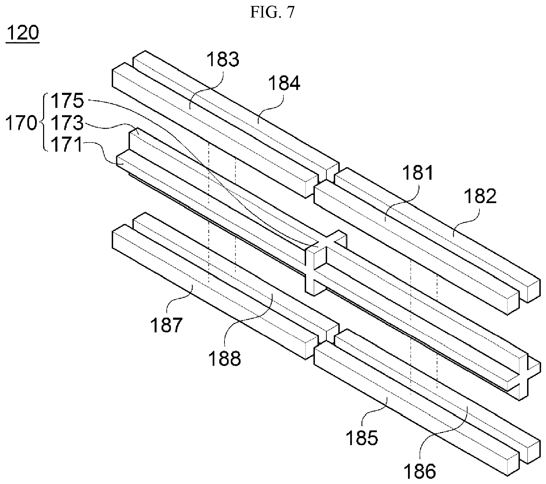

FIG. 7 is a view schematically illustrating another example of a housing part in the lighting apparatus in accordance with the embodiment of the present invention.

Referring to FIG. 7, the housing part 120 may include an insulation part 170 and first to eighth housing parts 181 to 188. The insulation part 170 may include a first insulating plate 171, a second insulating plate 173 and a third insulating plate 175. The first insulating plate 171 may be horizontally disposed in a lengthwise direction of the housing part 120. The second insulating plate 173 may be provided to be orthogonal to the first insulating plate 171. The second insulating plate 173 may be provided to be orthogonal to the first insulating plate 171 in a lengthwise direction of the first insulating plate 171. The third insulating plate 175 may be provided to be orthogonal to each of the first insulating plate 171 and the second insulating plate 173. The third insulating plate 175 may be provided to be orthogonal to each of the first insulating plate 171 and the second insulating plate 173 in a width direction of each of the first insulating plate 171 and the second insulating plate 173. In this case, the first insulating plate 171 is partitioned into eight seating surfaces. That is, an upper surface of the first insulating plate 171 is partitioned into four seating surfaces, and a lower surface of the first insulating plate 171 is partitioned into four seating surfaces. The first to fourth housing parts 181 to 184 may be seated on the four seating surfaces partitioned on the upper surface of the first insulating plate 171, and the fifth to eighth housing parts 185 to 188 may be seated on the four seating surfaces partitioned on the lower surface of the first insulating plate 171. The insulation part 170 is disposed among the first to eighth housing parts 181 to 188 so as to electrically insulate the first to eighth housing parts 181 to 188 from each other. The board (not shown) of the lighting part (not shown) may be seated on the first to fourth housing parts 181 to 184.

Here, the first housing part 181 and the second housing part 182 (or the third housing part 183 and the fourth housing part 184) may be electrically connected with the board (not shown) and attached to the first and second conductive attachment parts so as to receive the power. Meanwhile, the insulation part 170 may include the first and second insulating plates 171 and 173 without the third insulating plate 175. In this case, the first insulating plate 171 is partitioned into a total of four seating surfaces.

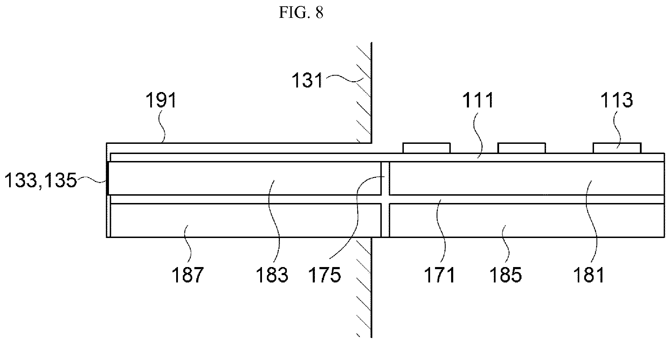

FIG. 8 is a cross-sectional view schematically illustrating a state in which the lighting apparatus including the housing part illustrated in FIG. 7 is installed at the wall structure.

Referring to FIG. 8, an insertion groove 191 in which a part of the lighting apparatus 102 is inserted may be provided at the installation surface 131. The part of the lighting apparatus 102 may be inserted into the insertion groove 191 in a lengthwise direction thereof. The light emitting elements 113 may be installed on a portion of the board 111 of the lighting apparatus 102 other than a portion thereof in which the lighting apparatus 102 is inserted. The first and second conductive attachment parts 133 and 135 may be provided on a surface of the insertion groove 191 facing one end of the lighting apparatus 102. The first conductive attachment part 133 may be electrically connected with the first terminal of the power source (not shown), and the second conductive attachment part 135 may be electrically connected with the second terminal of the power source (not shown).

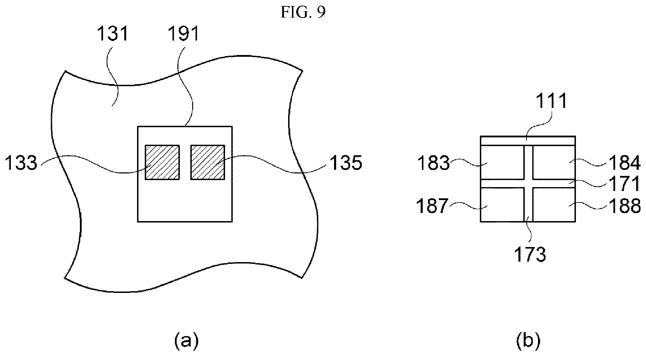

FIG. 9 is a view illustrating a state in which the first conductive attachment part 133 and the second conductive attachment part 135 are attached to the lighting apparatus 102 in the insertion groove of FIG. 8. FIG. 9A is a front view of the insertion groove 191, and FIG. 9B is a front view of one end of the lighting apparatus 102. Referring to FIG. 9, the first and second conductive attachment parts 133 and 135 may be provided at upper sides of one surface of the insertion groove 191 facing one end of the lighting apparatus 102 so as to be spaced from each other. The third and fourth housing parts 183 and 184 of the lighting apparatus 102 may be electrically connected with the board 111. One ends of the third and fourth housing parts 183 and 184 may be attached to the first and second conductive attachment parts 133 and 135, respectively. In this case, the lighting apparatus 102 may be fixed in the insertion groove 191, and may receive the power of the power source (not shown) from the first and second conductive attachment parts 133 and 135.

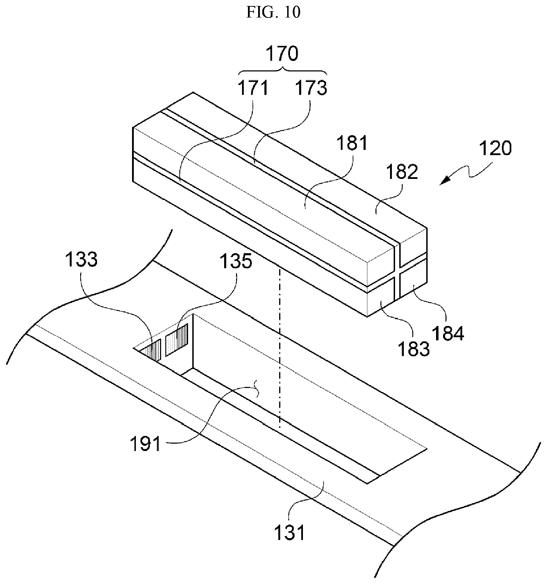

FIG. 10 is a view schematically illustrating a state in which the lighting apparatus including a housing part in accordance with still another embodiment of the present invention is installed at the wall structure.

Referring to FIG. 10, the housing part 120 may include an insulation part 170, and first to fourth housing parts 181 to 184. The insulation part 170 may include a first insulating plate 171 which is provided in a lengthwise direction of the housing part 120, and a second insulating plate 173 which is provided in the lengthwise direction of the housing part 120 to be orthogonal to the first insulating plate 171. The first and second housing parts 181 and 182 may be provided on an upper surface of the first insulating plate 171 with the second insulating plate 173 disposed therebetween. The third and fourth housing parts 183 and 184 may be provided on a lower surface of the first insulating plate 171 with the second insulating plate 173 disposed therebetween. The board (not shown) of the lighting part (not shown) may be seated on the first and second housing parts 181 and 182. The first and second housing parts 181 and 182 may be electrically connected with first and second circuit patterns of the board (not shown), respectively.

An insertion groove 191 in which the lighting apparatus 102 is inserted may be provided at the installation surface 131 of the wall structure 104. For example, the insertion groove 191 is provided at the installation surface 131 such as an indoor wall surface, a table, a bookshelf, a decoration cabinet, and an exhibition stand, and the lighting apparatus 102 may be inserted therein. The insertion groove 191 may be provided to have a size corresponding to the lighting apparatus 102. When the lighting apparatus 102 is inserted into the insertion groove 191, the lighting apparatus 102 may be integrally provided at the wall structure 104 not to protrude from the installation surface 131. In this case, an exterior of the wall structure 104 may be enhanced, and a lighting effect may be obtained through the lighting apparatus 102.

The first and second conductive attachment parts 133 and 135 may be provided at a surface of the insertion groove 191 facing one end of the lighting apparatus 102 so as to be spaced from each other. The first and second conductive attachment parts 133 and 135 may be electrically connected with the first and second terminals of the power source 50, respectively. When the lighting apparatus 102 is inserted into the insertion groove 191, one end of the first housing part 181 may be attached to the first conductive attachment part 133, and one end of the second housing part 182 may be attached to the second conductive attachment part 135. Then, the lighting apparatus 102 receives the power of the power source 50 through the first and second conductive attachment parts 133 and 135.

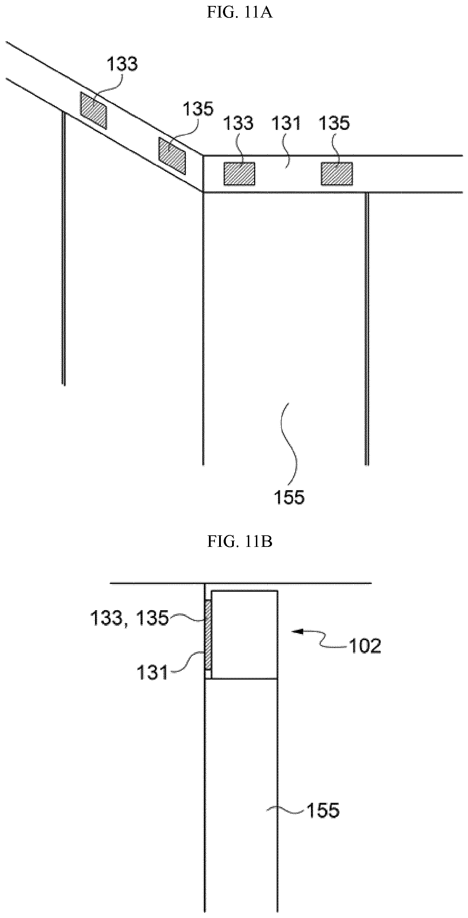

FIGS. 11A and 11B are views illustrating another example in which the lighting apparatus in accordance with the embodiment of the present invention is installed at the wall structure.

Referring to FIG. 11A, panels 155 may be installed on the wall surface 131. The panels 155 may be spaced predetermined distances from a ceiling. The first and second conductive attachment parts 133 and 135 may be provided at an upper side of the wall surface 131 on which the panels 155 are not provided.

FIG. 11B is a cross-sectional view illustrating a state in which the lighting apparatus 102 is installed at the wall surface 131. Referring to FIG. 11B, the lighting apparatus 102 may be attached to the first and second conductive attachment parts 133 and 135 to receive the power through the first and second conductive attachment parts 133 and 135. The lighting apparatus 102 may be provided not to protrude from a front surface of each panel 155. At this time, the lighting apparatus 102 may provided to be integrally formed with the panel 155. In this case, an entire exterior may be finished to be enhanced using the lighting apparatus 102 as a finishing member. The lighting apparatus 102 may be provided along upper sides of the wall surface 131.

According to the embodiment of the present invention, since the electronic apparatus is attached and fixed to the wall structure, a separate installing member for installing the electronic apparatus is not required, and thus a volume of the electronic apparatus can be reduced, and the electronic apparatus can be easily and simply installed. In addition, the electronic apparatus can be installed at various places and spaces without limitation of an installation place of the lighting apparatus. And since the electronic apparatus receives the power from the first and second conductive attachment parts provided at the installation surface, a separate connection device for power supply is not required, and thus a structure of the electronic apparatus can be simplified, while the volume thereof is reduced.

It will be apparent to those skilled in the art that various modifications can be made to the above-described exemplary embodiments of the present invention without departing from the the scope of the appended claims. Thus, it is intended that the present invention covers all such modifications provided they come within the scope of the appended claims and their equivalents.

## Claims

1. A lighting system (100) comprising a wall structure (104) and a lighting apparatus (102), the wall structure (104) comprising:
an installation surface (131) on which a lighting apparatus (102) is to be installed;
a first conductive attachment part (133) provided at the installation surface (131) to be attached to the lighting apparatus (102), the first conductive attachment part (133) electrically connected with a first terminal of a power source (50) to supply power to the lighting apparatus (102); and
a second conductive attachment part (135) provided at the installation surface (131) to be attached to the lighting apparatus (102), the second conductive attachment part (135) spaced apart from the first conductive attachment part (133), the second conductive attachment electrically connected with a second terminal of the power source (50),
wherein the lighting apparatus (102) comprises a lighting part (110) and a housing part (120) to accommodate the lighting part (110); and
the housing part (120) comprises:
a first housing part (121) attached to the first conductive attachment part (133), the first housing part (121) formed of a conductive material, the first housing part (121) electrically connected with the lighting part;
a second housing part (123) attached to the second conductive attachment part (135), the second housing part (123) formed of the conductive material, the second housing part (123) to be electrically connected with the lighting part;
**characterized in that** the lighting part (110) has a board (111) on which at least one light element is mounted; and the lighting apparatus (102) comprises
an insulation part (125) disposed between the first and second housing parts (121, 123) to insulate the first and second housing part (121, 123) from each other, and coupled with each of the first and second housing parts (121, 123),
wherein coupling grooves (122) are formed at each of the first and second housing parts (121, 123) in a lengthwise direction of the first and second housing parts (121, 123), coupling protrusions (124) are formed at both sides of the insulation part (125) in a lengthwise direction of the insulation part (125), and the coupling protrusions (124) are inserted and coupled into the coupling grooves (122) of the first and second housing parts (121, 123).

2. The lighting system (100) of claim 1, wherein the first and second conductive attachment parts (133, 135) are conductive adhesive tapes of which one surfaces are adhered to the installation surface (131) and the other surfaces are to be adhered to the lighting apparatus (102).

3. The lighting system (100) of claim 1, wherein the first and second conductive attachment parts (133, 135) are insulating adhesive tapes of which one surfaces are adhered to the installation surface (131) and the other surfaces are adhered to be the lighting apparatus (102), and the first and second conductive attachments parts (133, 135) each comprise at least one via hole electrically connected with the power source (50) at the one surfaces and electrically connected with the lighting apparatus (102) at the other surfaces.

4. The lighting system (100) of claim 1, wherein the first conductive attachment part (133) comprises:
a first conductive plate (133-1) fixed to the installation surface (131), the first conductive attachment part (133) electrically connected with a first terminal of the power source (50), the first conductive attachment part (133) to be in contact with the lighting apparatus (102); and
a first magnetic body (133-2) fixed to the installation surface (131), and the first magnetic body (133-2) is to be attached to the lighting apparatus (102); and
the second conductive attachment part (135) comprises:
a second conductive plate (135-1) fixed to the installation surface (131), the second conductive plate (135-1) electrically connected with a second terminal of the power source (50), the first conductive plate to be in contact with the lighting apparatus (102); and
a second magnetic body (135-2) fixed to the installation surface (131), the second magnetic body is to be attached to the lighting apparatus (102).

5. The lighting system (100) of claim 1, wherein the first conductive attachment part (133) and the second conductive attachment part (135) are magnetic bodies formed of a conductive material.

6. The lighting system (100) of claim 1, further comprising a third conductive attachment part provided at the installation surface (131) to be attached to the lighting apparatus (102), the third conductive attachment part electrically connected with a control device provided at an outside of the lighting apparatus (102) to transfer a control signal generated in the control device to the lighting apparatus (102).

7. The lighting system (100) of claim 6, wherein the third conductive attachment part transfers at least one of a dimming signal and a digital multiplex (DMX) signal generated from the control device to the lighting apparatus (102).

8. The lighting system (100) of claim 1, further comprising an insertion groove (191) provided at the installation surface (131) which is adopted so that a part or all of the lighting apparatus (102) can be inserted therein, wherein the first and second conductive attachment parts (133, 135) are provided in the insertion groove (191).

9. The lighting system (100) of claim 1, wherein the lighting apparatus (102) further comprises a heat radiation part (126) provided at at least one of the first and second housing parts (121, 123).

## Patentansprüche

1. Beleuchtungssystem (100) mit einer Wandstruktur (104) und einer Beleuchtungsvorrichtung (102), wobei die Wandstruktur (104) umfasst:
eine Installationsfläche (131), auf der ein Beleuchtungsgerät (102) installiert werden soll;
ein erstes leitendes Befestigungsteil (133), das an der Installationsfläche (131) angeordnet ist, die an der Beleuchtungsvorrichtung (102) anzubringen ist, wobei das erste leitende Befestigungsteil (133) elektrisch mit einem ersten Anschluss einer Stromquelle (50) verbunden ist, um die Beleuchtungsvorrichtung (102) mit Strom zu versorgen; und
ein zweites leitfähiges Befestigungsteil (135), das an der Installationsfläche (131) angeordnet ist, die an der Beleuchtungsvorrichtung (102) zu befestigen ist, wobei das zweite leitfähige Befestigungsteil (135) von dem ersten leitfähigen Befestigungsteil (133) beabstandet ist, wobei die zweite leitfähige Befestigung elektrisch mit einem zweiten Anschluss der Stromquelle (50) verbunden ist,
wobei die Beleuchtungsvorrichtung (102) einen Beleuchtungsteil (110) und einen Gehäuseteil (120) zur Aufnahme des Beleuchtungsteils (110) umfasst; und
der Gehäuseteil (120) umfasst:
ein erstes Gehäuseteil (121), das an dem ersten leitfähigen Befestigungsteil (133) befestigt ist, wobei das erste Gehäuseteil (121) aus einem leitfähigen Material gebildet ist, wobei das erste Gehäuseteil (121) elektrisch mit dem Beleuchtungsteil verbunden ist;
ein zweites Gehäuseteil (123), das an dem zweiten leitfähigen Befestigungsteil (135) befestigt ist, wobei das zweite Gehäuseteil (123) aus dem leitfähigen Material gebildet ist und das zweite Gehäuseteil (123) mit dem Beleuchtungsteil elektrisch zu verbinden ist;
**dadurch gekennzeichnet, dass** der Beleuchtungsteil (110) eine Platine (111) aufweist, auf der mindestens ein Leuchtelement montiert ist; und die Beleuchtungsvorrichtung (102) umfasst
ein Isolierteil (125), das zwischen dem ersten und dem zweiten Gehäuseteil (121, 123) angeordnet ist, um das erste und das zweite Gehäuseteil (121, 123) voneinander zu isolieren, und das mit jedem des ersten und des zweiten Gehäuseteils (121, 123) gekoppelt ist,
wobei Kopplungsnuten (122) an jedem der ersten und zweiten Gehäuseteile (121, 123) in einer Längsrichtung der ersten und zweiten Gehäuseteile (121, 123) ausgebildet sind, Kopplungsvorsprünge (124) an beiden Seiten des Isolierteils (125) in einer Längsrichtung des Isolierteils (125) ausgebildet sind, und die Kopplungsvorsprünge (124) in die Kopplungsnuten (122) der ersten und zweiten Gehäuseteile (121, 123) eingesetzt und gekoppelt sind.

2. Beleuchtungssystem (100) nach Anspruch 1, bei dem das erste und das zweite leitende Befestigungsteil (133, 135) leitende Klebebänder sind, von denen eine Oberfläche auf die Installationsfläche (131) geklebt ist und die andere Oberfläche auf die Beleuchtungsvorrichtung (102) geklebt werden soll.

3. Beleuchtungssystem (100) nach Anspruch 1, wobei das erste und das zweite leitende Befestigungsteil (133, 135) isolierende Klebebänder sind, von denen eine Oberfläche an der Installationsfläche (131) und die andere Oberfläche an der Beleuchtungsvorrichtung (102) angeklebt ist, und das erste und das zweite leitende Befestigungsteil (133, 135) jeweils mindestens ein Durchgangsloch aufweisen, das an der einen Oberfläche elektrisch mit der Stromquelle (50) und an der anderen Oberfläche elektrisch mit der Beleuchtungsvorrichtung (102) verbunden ist.

4. Beleuchtungssystem (100) nach Anspruch 1, wobei das erste leitende Befestigungsteil (133) umfasst:
eine erste leitende Platte (133-1), die an der Installationsfläche (131) befestigt ist, wobei das erste leitende Befestigungsteil (133) elektrisch mit einem ersten Anschluss der Stromquelle (50) verbunden ist, wobei das erste leitende Befestigungsteil (133) in Kontakt mit der Beleuchtungsvorrichtung (102) steht; und
einen ersten magnetischen Körper (133-2), der an der Installationsfläche (131) befestigt ist, wobei der erste magnetische Körper (133-2) an der Beleuchtungsvorrichtung (102) angebracht werden soll; und
das zweite leitende Befestigungsteil (135) umfasst:
eine zweite leitende Platte (135-1), die an der Installationsfläche (131) befestigt ist, wobei die zweite leitende Platte (135-1) elektrisch mit einem zweiten Anschluss der Stromquelle (50) verbunden ist und die erste leitende Platte mit der Beleuchtungsvorrichtung (102) in Kontakt steht; und
einen zweiten magnetischen Körper (135-2), der an der Installationsfläche (131) befestigt ist, wobei der zweite magnetische Körper an der Beleuchtungsvorrichtung (102) anzubringen ist.

5. Beleuchtungssystem (100) nach Anspruch 1, wobei das erste leitende Befestigungsteil (133) und das zweite leitende Befestigungsteil (135) magnetische Körper sind, die aus einem leitenden Material gebildet sind.

6. Beleuchtungssystem (100) nach Anspruch 1, das ferner ein drittes leitfähiges Befestigungsteil umfasst, das an der Installationsfläche (131) angeordnet ist, die an der Beleuchtungsvorrichtung (102) zu befestigen ist, wobei das dritte leitfähige Befestigungsteil elektrisch mit einer Steuervorrichtung verbunden ist, die an einer Außenseite der Beleuchtungsvorrichtung (102) angeordnet ist, um ein in der Steuervorrichtung erzeugtes Steuersignal an die Beleuchtungsvorrichtung (102) zu übertragen.

7. Beleuchtungssystem (100) nach Anspruch 6, bei dem das dritte leitende Befestigungsteil ein Dimmsignal und/oder ein von der Steuervorrichtung erzeugtes digitales Multiplex-(DMX-)Signal an das Beleuchtungsgerät (102) überträgt.

8. Beleuchtungssystem (100) nach Anspruch 1, das ferner eine Einführungsnut (191) aufweist, die an der Installationsfläche (131) angeordnet ist, die so ausgelegt ist, dass ein Teil oder die gesamte Beleuchtungsvorrichtung (102) darin eingeführt werden kann, wobei das erste und das zweite leitende Befestigungsteil (133, 135) in der Einführungsnut (191) angeordnet sind.

9. Beleuchtungssystem (100) nach Anspruch 1, wobei die Beleuchtungsvorrichtung (102) ferner einen Wärmestrahlungsteil (126) aufweist, der an mindestens einem der ersten und zweiten Gehäuseteile (121, 123) angeordnet ist.

## Revendications

1. Système d'éclairage (100) comprenant une structure de paroi (104) et un appareil d'éclairage (102), la structure de paroi (104) comprenant :
une surface d'installation (131) sur laquelle un appareil d'éclairage (102) est destiné à être installé ;
une première partie de fixation conductrice (133) fournie au niveau de la surface d'installation (131) destinée à être attachée à l'appareil d'éclairage (102), la première partie de fixation conductrice (133) étant connectée électriquement à une première borne d'une source d'alimentation (50) pour fournir un courant à l'appareil d'éclairage (102) ; et
une deuxième partie de fixation conductrice (135) fournie au niveau de la surface d'installation (131) destinée à être fixée à l'appareil d'éclairage (102), la deuxième partie de fixation conductrice (135) étant espacée de la première partie de fixation conductrice (133), la seconde fixation conductrice étant connectée électriquement à une seconde borne de la source d'alimentation (50),
dans lequel l'appareil d'éclairage (102) comprend une partie d'éclairage (110) et une partie de logement (120) destinée à recevoir la partie d'éclairage (110) ; et
la partie de logement (120) comprend :
une première partie de logement (121) fixée à la première partie de fixation conductrice (133), la première partie de logement (121) étant formée dans un matériau conducteur, la première partie de logement (121) étant connectée électriquement à la partie d'éclairage ;
une seconde partie de logement (123) fixée à la deuxième partie de fixation conductrice (135), la seconde partie de logement (123) étant formée dans un matériau conducteur, la seconde partie de logement (123) étant destinée à être connectée électriquement à la partie d'éclairage,
**caractérisé en ce que** la partie d'éclairage (110) présente une planchette (111) sur laquelle est montée au moins un élément d'éclairage ; et l'appareil d'éclairage (102) comprend
une partie isolante (125) disposée entre les première et seconde parties de logement (121, 123) pour isoler les première et seconde parties de logement (121, 123) l'une de l'autre, et couplée à chacune des première et seconde parties de logement (121, 123),
dans lequel des rainures d'accouplement (122) sont formées au niveau de chacune des première et seconde parties de logement (121, 123) dans un sens de longueur des première et seconde parties de logement (121, 123), des protubérances d'accouplement (124) sont formées sur les deux côtés de la partie isolante (125) dans un sens de longueur de la partie isolante (125), et les protubérances d'accouplement (124) sont insérées et accouplées dans les rainures d'accouplement (122) des première et seconde parties de logement (121, 123).

2. Système d'éclairage (100) selon la revendication 1, dans lequel les première et deuxième parties de fixation conductrices (133, 135) sont des rubans adhésifs conducteurs dont une surface adhère à la surface d'installation (131) et les autres surfaces sont destinées à adhérer à l'appareil d'éclairage (102).

3. Système d'éclairage (100) selon la revendication 1, dans lequel les première et deuxième parties de fixation conductrices (133, 135) sont des rubans adhésifs isolants dont une surface adhère à la surface d'installation (131) et les autres surfaces sont destinées à adhérer à l'appareil éclairage (102), et les première et deuxième parties de fixation conductrices (133, 135) comprennent chacune au moins un orifice connecté électriquement à la source d'alimentation (50) au niveau d'une surface et connecté électriquement à l'appareil d'éclairage (102) au niveau des autres surfaces.

4. Système d'éclairage (100) selon la revendication 1, dans lequel la première partie de fixation conductrice (133) comprend :
une première plaque conductrice (133-1) fixée à la surface d'installation (131), la première partie de fixation conductrice (133) étant connectée électriquement à une première borne de la source d'alimentation (50), la première partie de fixation conductrice (133) étant destinée à être en contact avec l'appareil d'éclairage (102) ; et
un premier corps magnétique (133-2) fixé à la surface d'installation (131), et le premier corps magnétique (133-2) étant destiné à être attaché à l'appareil d'éclairage (102) ; et
la deuxième partie de fixation conductrice (135) comprend :
une seconde plaque conductrice (135-1) fixée à la surface d'installation (131), la seconde plaque conductrice (135-1) étant connectée électriquement à une seconde borne de la source d'alimentation (50), la première plaque conductrice étant destinée à être en contact avec l'appareil d'éclairage (102) ; et
un second corps magnétique (135-2) fixé à la surface d'installation (131), le second corps magnétique étant destiné à être fixé à l'appareil d'éclairage (102).

5. Système d'éclairage (100) selon la revendication 1, dans lequel la première partie de fixation conductrice (133) et la deuxième partie de fixation conductrice (135) sont des corps magnétiques formés dans un matériau conducteur.

6. Système d'éclairage (100) selon la revendication 1, comprenant en outre une troisième partie de fixation conductrice fournie au niveau de la surface d'installation (131) destinée à être fixée à l'appareil d'éclairage (102), la troisième partie de fixation conductrice étant connectée électriquement à un dispositif de commande fourni au niveau d'un extérieur de l'appareil d'éclairage (102) pour transférer un signal de commande généré dans le dispositif de commande à l'appareil d'éclairage (102).

7. Système d'éclairage (100) selon la revendication 6, dans lequel la troisième partie de fixation conductrice transfère au moins un signal d'atténuation et/ou un signal de multiplexage numérique (DMX) généré par le dispositif de commande à l'appareil d'éclairage (102).

8. Système d'éclairage (100) selon la revendication 1, comprenant en outre une rainure d'insertion (191) fournie au niveau de la surface d'installation (131) qui est adoptée de telle sorte qu'une partie ou la totalité de l'appareil d'éclairage (102) puisse être insérée à l'intérieur de celle-ci, les première et deuxième parties de fixation conductrices (133, 135) étant fournies dans la rainure d'insertion (191).

9. Système d'éclairage (100) selon la revendication 1, dans lequel l'appareil d'éclairage (102) comprend en outre une partie de rayonnement de chaleur (126) fournie au niveau d'au moins une des première et seconde parties de logement (121, 123).
